Europäisches Patentamt

European Patent Office

Office européen des brevets

(11) Publication number: **0 423 887 A2**

# EUROPEAN PATENT APPLICATION

(21) Application number: 90202718.4

(22) Date of filing: 12.10.90

(51) Int. Cl.5: **G02F 1/136, G09G 3/36**

(30) Priority: 16.10.89 GB 8923281

(43) Date of publication of application:
**24.04.91 Bulletin 91/17**

(84) Designated Contracting States:
**DE FR GB IT NL**

(71) Applicant: **PHILIPS ELECTRONIC AND ASSOCIATED INDUSTRIES LIMITED Philips House 188 Tottenham Court Road London W1P 9LE(GB)**

(84) **GB**

Applicant: **N.V. Philips' Gloeilampenfabrieken**

Groenewoudseweg 1
NL-5621 BA Eindhoven(NL)

(84) **DE FR IT NL**

(72) Inventor: **Knapp, Alan George, c/o Philips Research Lab.
Redhill
Surrey, RH1 5HA(GB)**

(74) Representative: **Williamson, Paul Lewis et al
PHILIPS ELECTRONICS Patents and Trade Marks Department Philips House 188 Tottenham Court Road
London W1P 9LE(GB)**

(54) **Active matrix-addressed display devices.**

(57) An active matrix display device comprises a row and column array of liquid crystal display elements (12) driven by switching and data signals supplied via row and column conductors (R and C) from driver circuits (30 and 32), with at least most display elements each being addressed through two TFTs (TA, TB) connected to different row conductors (R) for fault tolerance purposes. At their ends remote from the driver circuit (30) the row conductors (R) are each connected to a supplementary TFT (40) to which a predetermined potential, around the off level applied to TFTs TA and TB, is supplied, this TFT being periodically switched in operation. In the event of a row conductor discontinuity, switching of the TFT (40) prevents any charge build up on the broken section and ensures that the display element TFTs connected thereto are maintained sufficiently off. The supplementary TFTs 40 may be respectively switched by a switching signal supplied to an adjacent row conductor by the circuit (30) using an interconnection (42) or, alternatively the TFTs (40) may be switched simultaneously through a common gate line (43) in intervals between successive switching signals from the circuit (30).

*Fig. 1.*

## ACTIVE MATRIX-ADDRESSED DISPLAY DEVICES

This invention relates to an active matrix-addressed display device. More particularly, the invention is concerned with an active matrix-addressed liquid crystal display device comprising a row and column array of display elements each having first and second spaced electrodes with liquid crystal therebetween and each being associated with two transistors operable by switching signals to supply data signals to the display element, and sets of row and column conductors to which switching signals and data signals are applied respectively by row and column driver circuits connected to their ends, with the two transistors of each display element in a row being connected respectively to two different row conductors.

It is common in active matrix display devices to use a single switching transistor for each display element. The source electrodes of all transistors in the same column are connected to a respective one of a set of column conductors to which data signals are applied and the gate electrodes of all transistors in the same row are connected to a respective one of a set of row conductors to which switching (gating) voltages are applied to control switching of the transistors. An electrode of each display element is connected to the drain of its respective transistor. In operation, row conductors are scanned one at a time with a switching signal so as to turn on all transistors in each row in turn with data signals being applied to the column conductors appropriately in synchronism for each row in turn so as to build up a display, the transistors serving to isolate the display elements in the interval until they are next scanned. The performance of any display element is, therefore, dependent on the proper operation of its respective transistor and address conductors.

With the increasingly larger display areas now being proposed there comes a corresponding increase in the number of display elements, and hence switching transistors, required. A major problem in making large area display devices is yield. A discontinuity in a row conductor or just defective transistors can render the device unacceptable. Depending on the nature of the defect, even one defective transistor can lead to complete rows or columns of display elements being unusable.

It has been proposed, for example as described in GB-A-2115199, to use two transistors for each display element which are connected to respective, different, row conductors, to provide a degree of fault tolerance. Each row conductor is connected to transistors asociated with two adjacent rows of display elements so that, in effect, each row conductor is shared by the two rows of elements. Considering one display element, and assuming both associated transistors and their respective row conductors are not faulty, the first transistor operates to load the display element with a data signal voltage during one row address period and thereafter, during a sucessive row address period, the second transistor operates to over-write almost immediately the data voltage with a data signal voltage specifically intended for that display element. In the event of the first transistor or the connection to it proving to be defective and open circuit the device operates in the conventional way as for a single transistor drive using the second transistor. If the second transistor or the row conductor leading thereto is defective and open circuit data voltage information intended for a display element in adjacent row is written in this element by the first transistor and not then overwritten. Although a display element may therefore produce the same display effect as another element rather than an effect particularly intended for that element this is imperceptible to a viewer and acceptable displays can be produced.

In principle this technique can correct or partially correct for an open circuit in the transistor or a row conductor. However, it has been observed that in the event of a row conductor being open circuit at a point along its length, that is, discontinuous, display quality problems can still occur with display elements associated with the section of row conductor beyond its discontinuity.

It is an object of the present invention to provide an active matrix-addressed-display device of the above-described kind which offers improved fault tolerance.

According to the present invention, there is provided an active matrix addressed liquid crystal display device of the kind referred to in the opening paragraph which is characterised in that the row conductors are each connected at their end remote from the row driver circuit to a supplementary switching transistor which is switched periodically during operation of the device to connect the end of the row conductor to a predetermined potential.

The invention involves the recognition that the observed erratic display effects from display elements associated with a broken section of a row conductor are likely caused by a charge build up on the broken section which results in leakage of the transistors connected thereto. The invention overcomes this problem.

If one of the row conductors should include a discontinuity along its length, then the periodic connection to the predetermined potential through the supplementary transistor ensures that any charge build up on that conductor for the section beyond the discontinuity is prevented and that instead the broken section is discharged and clamped to the level of the predetermined potential, this level being chosen to be sufficient to maintain the transistors associated with the section substantially in their "off" state. Without such a connection, the section of row conductor beyond the discontinuity is left floating and, due it is thought to transistor leakages particularly between the source and gate for example and possibly also parasitic capacitance, can float to a voltage at which the transistors whose gates are connected thereto are not fully "off", causing the display elements concerned to be loaded with incorrect data signals after their intended loading period and producing erroneous display effects. The invention prevents floating of the row conductor in this manner and hence affords further fault tolerance. The display elements associated with a discontinuous section of row conductor continue then too provide acceptable displays by virtue of the operation of the transistors connected to their other associated row conductor.

For convenience the predetermined potential may correspond to the potential, commonly referred to as Voff, supplied to the row conductors by the row driver circuit between successive switching signals, commonly referred to as Von. The predetermined potential need not, however, correspond exactly with Voff. Preferably, it should be such that for all expected values of column (data signal) voltage the gates of the display element transistors are sufficiently negative that the charge flow through the display element transistors during one field period is much less than the charge stored on the display element. This will be achieved automatically if the predetermined potential is equal to the off voltage of the row drive signals.

The supplementary transistors are preferably connected to a common line to which the predetermined potential is applied, this common line, for convenience, being formed on the substrate simultaneously with the row conductors or the column conductors. However, instead of using a common line in this way, it is possible to utilise the fact that a predetermined potential corresponding to Voff is present on the row conductors for most of the time. Thus a predetermined potential corresponding to Voff may be supplied to each supplementary transistor by connecting the source of each supplementary transistor to, for example, a preceding row conductor.

The supplementary transistors are preferably provided together with the row address conductors and display element transistors on a common substrate of the device for greatest convenience and are formed simultaneously with the display element transistors.

Thus fabrication of the display device is greatly facilitated. With this arrangement the supplementary transistors can be fabricated in exactly the same technology as the display element transistors, for example as TFTs using amorphous silicon technology, so that the provision of the supplementary transistors is achieved simply and without requiring any change in processing. Similarly the provision of the common line simultaneously with the row or column conductors eliminates the need for any additional processing operations. A display device having improved fault tolerance is then obtained at minimal expense.

In one embodiment of the invention, the gate of each supplementary transistor is connected by a line, formed for convenience simultaneously with the row conductors, to a row conductor adjacent the row conductor with which the respective supplementary transistor is associated. Hence when a switching signal (Von) is applied to one row conductor (Rn) in order to turn on the display element transistors connected to that row conductor the supplementary transistor associated with, for example, the preceding row conductor (Rn-1) is also turned on for the duration of the switching signal (Von) thereby connecting that preceding row conductor to the predetermined potential (Voff ). Similarly, when a switching signal (Von) is applied in sequence to the next row conductor (Rn + 1) the supplementary transistor associated with the preceding row conductor (Rn) is turned on. This embodiment has the advantage of simplicity both as regards construction and the provision of the periodic predetermined potential signal.

In another embodiment of the invention, the gates of the supplementary transistors are interconnected and a gating signal is applied periodically to the gates to turn on all supplementary transistors simultaneously. The gating signals may be applied in intervals between successive switching signals and/or during field blanking periods. This embodiment has the advantage that if the supplementary transistors are comparatively large, which may be the case, then the arrangement does not add extra capacitive load to the rows which would cause slowing and reduction in amplitude of the gate pulses due to row conductor resistance. Also, more frequent clamping is possible. The regularity of clamping which might be required will likely depend on a number of factors such as various leakage resistances and thus would be difficult to determine.

The two switching transistors associated with each display element may be connected to the same column conductor. However, in a preferred arrangement, the two transistors associated with each display element are connected to respective, different, column conductors as well as respective, different, row conductors, thus providing redundancy should one of the column conductors suffer a discontinuity at some point along its length. With a colour display device in which each one of a group of three adjacent display elements displays a respective one of the three primary colours and in which diagonally adjacent display elements display the same colour component a further benefit is obtained in that if a display element's correct row conductor, column conductor or switching transistor is effectively open circuit the display element will produce, through the operation of its associated second switching transistor, the same display effect as that of the nearest display element of the same colour.

Column conductors may be shared by adjacent columns of display elements or may be associated solely with a respective column of display elements in known ways.

The manner of interconnection of row conductors with rows of display elements may follow any suitable known scheme. In a simple scheme, for example, each row conductor may be connected with, and shared by, respective transistors associated with two adjacent rows of display elements. In another example, the rows of display elements may be arranged in groups of adjacent pairs with each group of two rows being driven via three row conductors associated solely with the group, two of the row conductors being connected to transistors of respective rows of display elements while the intermediate row conductor is shared by both rows of display elements and connected to transistors of both rows of elements. It will be appreciated that suitably modified driving schemes are required depending on the row and column conductor schemes adopted.

Active matrix-addressed liquid crystal display devices in accordance with the invention will now be described, by way of example, with reference to the accompanying drawings, in which:-

Figure 1 is an equivalent circuit diagram of one embodiment of a display device according to the invention showing some of the display elements and their associated addressing transistors and conductors;

Figure 2 is a schematic cross-section, not to scale, through a central region of a typical display element;

Figure 3 is a timing diagram for switching signals supplied to three typical row conductors;

Figure 4 shows the equivalent circuit diagram of another embodiment of display device according to the invention, and

Figure 5 shows signal waveforms used in the embodiment of Figure 4.

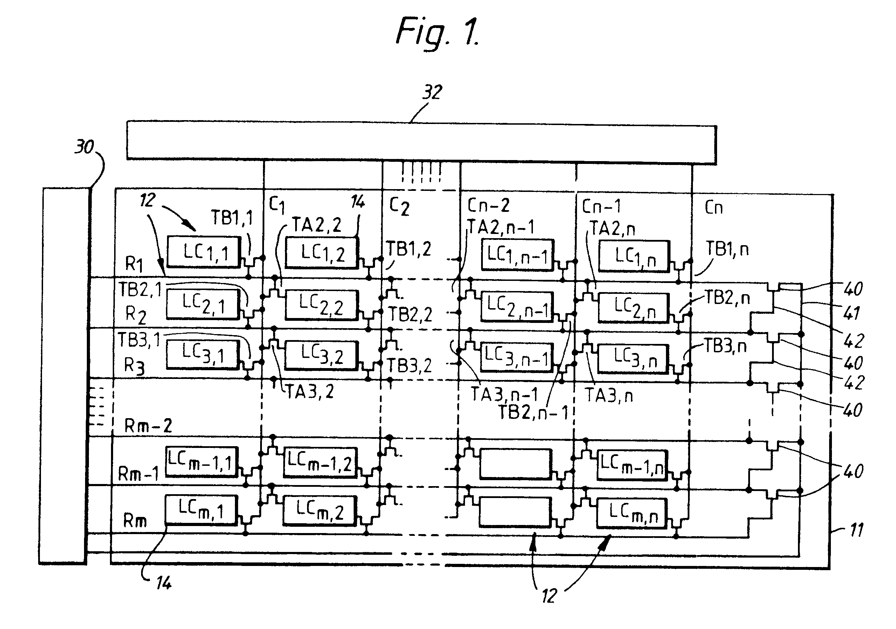

Referring to Figure 1, the active matrix-addressed display device, which is suitable for displaying TV pictures, comprises a display panel 11 having m rows (1 to m) with n horizontally arranged display elements 12 (1 to n) in each row. Only five rows of display elements, rows 1 to 3, m-1, and m, and four elements in each row are shown for clarity. In practice, the total number of display elements (mxn) in the matrix array may be 200,000 or more. The display elements are referenced LCy,x where y and x designate their row and column positions respectively. The display elements are addressed via sets of row and column conductors, here referenced R and C, which extend in spaces between the display elements and which are connected respectively at their ends to row and column driver circuits 30 and 32 providing switching and data signals in the usual manner. For fault tolerance purposes all rows of the display elements except the first are associated with two row conductors. Similarly, all display elements apart from those in the first column are associated with two column conductors. The application of data (video) signals to each of these display elements, apart from those of the first row and the first column, is controlled by two switching transistors, designated TAy,x and TBy,x, connected to respective ones of the pairs of row and column conductors associated with the display element. The display elements of the first row and of the first column, being associated only with a single row conductor and a single column conductor respectively, are, accordingly, associated with a single switching transistor. As such these particular elements do not have the same fault tolerance. This does not matter if the display elements at the periphery of the panel are to be masked from view in the finished product as faults in the operation of these elements will not then be visible. As will be described subsequently, however, these edge elements can be given the same fault tolerance as others by providing an additional row and/or column conductor. For all other rows and columns the switching transistors associated with the display elements of each individual row are connected to a respective common pair of row conductors. Likewise the switching transistors associated with all the display elements in the same column are connected to the same respective common pair of column conductors.

In the particular arrangement shown the row and column conductors, apart from the last, are each associated with, and shared by, respectively two adjacent rows and two adjacent columns of display elements. However, other arrangements are possible, as will be mentioned, for example in which the two TFTs associated with each of the display elements in one column being connected to a respective one column conductor.

The switching transistors in this embodiment comprise TFTs fabricated in conventional manner using amorphous silicon or polysilicon technology. The gate and source terminals of the TFTs are connected to their associated row and column conductors respectively.

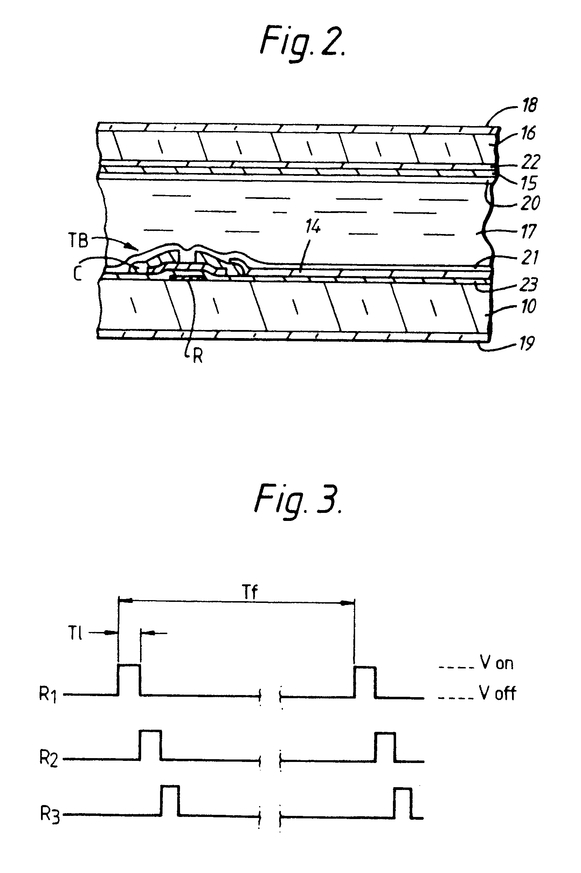

A typical display element 12, as shown in part cross-section in Figure 2, comprises a transparent pad electrode 14, (shown as a simple rectangular electrode in Figure 1), which is carried on a transparent substrate 10 of the display device together with the row and column conductors and the TFTs and which is connected to the drain terminals of its associated two switching TFTs, only one of which is visible, and an opposing transparent electrode 15 carried on a second, spaced, transparent substrate 16 with liquid crystal material 17 disposed therebetween. The opposing electrodes of the display elements on the second substrate comprise individual portions of a common counter electrode coextensive with the area occupied by the pad electrodes in the usual way. The two substrates, which may be of glass, are provided with polarising layers 18 and 19 and orientation layers 20 and 21 in conventional manner. The liquid crystal material serves to modulate light transmitted through the display elements according the value of to a data voltage applied thereto with each display element being operable to vary light transmission individually through the device.

For producing a colour display, each display element is registered with a colour filter 22 in known manner with groups of three adjacent display elements each providing a colour triplet. The triplets are arranged such that diagonally adjacent display elements in the array display the same primary colour, either red, green or blue.

For improved fault tolerance, each of the row conductors, R1 to Rm-1, is connected at its end remote from the driver circuit to the drain of a respective supplementary TFT 40. The other, source, sides of the TFTs 40 are interconnected with one another through a line 41 extending to the driver circuit 30 where it is connected to a source of predetermined potential. The gate of each TFT 40 is connected via a respective line 42 to the immediately succeeding row conductor. Thus, for example, the TFT 40 associated with row conductor R1 has its gate connected to row conductor R2 and so on. In the arrangement shown, the last row conductor, Rm, is not provided with a supplementary TFT. However, a supplementary TFT could be provided for this row in similar manner with its gate connected to a different row conductor, although this would entail a cross-over interconnection. Alternatively the gate of this supplementary TFT could be connected via a separate line to a source providing periodically a pulse of the predetermined potential, for example by using an extra row conductor connected to an extra row drive output of the row driver circuit 30.

In operation, the display elements are driven on a row at a time basis by scanning the row conductors R sequentially with a row selection switching signal starting from the uppermost row downwards so as to turn on the switching TFTs in each row in turn and by applying data signals to the column conductors as appropriate and in synchronism with the switching signals so as to build up a complete display picture in a frame period. The row and column driver circuits 30 and 32 providing the switching and data signals are of conventional form. Figure 3 shows the timing relationship of the waveforms supplied by the row driver circuit 30 for a typical group of three consecutive row conductors, in this case the first three. For a TV display, the data signals comprise video information signals and each row of display elements is provided with video information signals corresponding to a TV line. Using one row at a time addressing, each of the groups of switching TFTs $TA_{y,x}$ and $TB_{y,x}$ associated with a single row of display elements is switched on for a time period T1 by a pulse signal Von during which video information signals are transferred from the column conductors related to those TFTs to the display elements. During the remainder of the field period Tf (Tf being approximately equal to m.T1) the TFTs are turned off by the application of Voff to the row conductors and serve to isolate the display elements from the column conductors.

More precisely, each row of display elements is addressed by scanning two consecutive row conductors. Considering for example the second row (y = 2) of display elements in Figure 1, comprising $LC_{2,1}$ to $LC_{2,n}$, a selection switching signal Von applied to the row conductor R1 serves to turn on the TFTs $TA_{2,2}$ to $TA_{2,n}$ allowing the video information signals then appearing on the column conductors C1 to Cn-1 to be supplied to the display elements $LC_{2,2}$ to $LC_{2,n}$ respectively. Because the row conductor R1 is connected also to the switching transistors ($TB_{1,1}$ to $TB_{1,n}$) for the preceding row of display elements ($LC_{1,1}$ to $LC_{1,n}$) these elements are similarly supplied with the corresponding video information voltages. Thereafter, the switching signal Von is removed from the row conductor R1 and the reference voltage signal $V_{off}$, which may be ground or zero volts, is applied which turns off the TFTs $TA_{2,2}$ to $TA_{2,n}$ (and likewise the TFTs $TB_{1,1}$ to $TB_{1,n}$) thereby isolating the display elements $LC_{2,2}$ to $LC_{2,n}$ (and $LC_{2,1}$ to $LC_{2,n}$ respectively). Practically simultaneously, the selection switching signal Von is applied to row conductor R2 so as to turn on the TFTs $TB_{2,1}$ to

TB2,n thereby allowing the video information signals now present on the column conductors C1 to Cn to be supplied to the display elements LC2,1 to LC2,n respectively. The previously loaded video information of these elements is thus overwritten with the values properly intended for these elements. Similarly, the switching signal Von applied to row conductor R2 also causes the TFTs TA3,2 to TA3,n of the succeeding display element row to be turned on so that the same video information signals on column conductors C1 to Cn-1 are supplied also to the elements LC3,2 to LC3,n respectively.

Upon subsequently returning the voltage applied to row conductor R2 from Von to Voff, and applying the switching voltage signal Von to the next row conductor R3, the TFTs TB2,1 to TB2,n are turned off to isolate the display elements LC2,1 to LC2,n so that the last applied video information signals are retained and, in conjunction with a reference voltage applied to the opposing electrodes of the elements, the desired display effect achieved from the elements.

It is seen, therefore, that within two successive line address periods T1, corresponding to 128 microseconds for a PAL system TV display, the display elements LC2,2 to LC2,n are firstly loaded with respective video information signals applied also to, and intended primarily for, the corresponding but one display element of the preceding row and then loaded with video information signals specifically intended for the display elements of that row. Hence, in the event of one of the TFTs TB2,2 to TB2,n being open circuit and preventing the proper video information signal to be supplied to the display element affected, that display element will continue to produce a display effect in accordance with the video information signal loaded via its other TFT. The display element affected will in these circumstances therefore produce a display effect which is substantially the same as that provided by a diagonally adjacent display element of the preceding row. Since diagonally adjacent display elements are arranged to display the same colour the affected display element accordingly reproduces the display effect as its closest display element of the same colour. If a TFT fails short circuit it can be disconnected by laser scribing or the like thus effectively producing an open circuit type failure.

The row conductors R are scanned in turn so that the above-described driving scheme is repeated for each row of display elements in turn, the display effect produced by the elements being maintained until they are next addressed in a subsequent field period.

Thus, for all display elements, apart from those of the first row and column, a voltage is normally written via its TFT TA and then almost immediately over-written with the correct voltage via TFT TB. If a TFT TA or connection to it is open circuit the device operates in the conventional way. If a transistor TB is open circuit the information on an adjacent display element is written in and not over-written. The "error" would not normally be noticeable.

Considering now the effect of a row conductor R being open circuit, for example having a break, at some point along its length so that one or more display element TFTs connected thereto beyond the break are not able to receive switching signals from the driver circuit 30, then operation of the supplementary TFTs at the ends of the row conductors prohibits the possibility of the disconnected section of the row conductor floating to a voltage due possibly to transistor leakage and capacitive effects at which the coupled display element TFTs are not fully off. The disconnected section is clamped by operation of the supplementary TFT 40 to a sufficiently low voltage, corresponding to Voff, to ensure that the display element TFTs connected to the disconnected section are maintained in their "off" condition. The display elements concerned are then driven solely through the transistors connected to their associated other row conductor so that operation of the elements to provide satisfactory display effects is retained.

The supplementary TFTs 40 are each gated, and hence turned on, periodically in operation of the display device, this gating being separated in time from the period during which a switching signal is supplied to the row conductor associated with that TFT 40. The supplementary TFT 40 associated with any particular row conductor is normally in the off state. However it is turned on, once per field period, upon the application of a switching signal Von to the immediately succeeding row conductor, by virtue of its gate being connected to that succeeding row conductor through the line 42, for the duration of the switching signal Von thereby connecting the end of its associated row conductor, and clamping that row conductor, to a predetermined potential, namely Voff, through the line 41. If the row conductor is not discontinuous the effect is that the voltage Voff is applied to both ends of the row conductor. If, however, the row conductor is dicontinuous, then the effect is that any charge that may have accumulated on the floating broken section is removed and both sections are clamped tovoff. As each of the row conductors, apart from the first, is scanned in turn with the switching signal Von the supplementary, clamping, TFT 40 of the immediately proceding row conductor is operated in identical manner. This operation is repeated in every field. The predetermined potential does not have to correspond exactly with Voff but should be sufficient to maintain the display element TFTs in their "off" state. The predetermined potential should be such that for all expected values of column voltage the gates of the display element TFTs are sufficiently negative that the charge flow through these TFTs during one field period is much less than the charge stored on the display element.

Because the first row of display elements are each merely addressed through one TFT the supplementary TFT 40 of row conductor R1 simply means that in the event of this row conductor being discontinuous the display elements concerned produce no display effect. This supplementary TFT can be omitted if desired.

In a modification of this embodiment, use may be made of the fact that potential Voff is present on all but one row conductor at any given time. Instead of connecting the sources of the supplementary TFTs to a common line 41 to which Voff is applied, the sources of the respective supplementary TFT could be connected to a preceding row conductor.

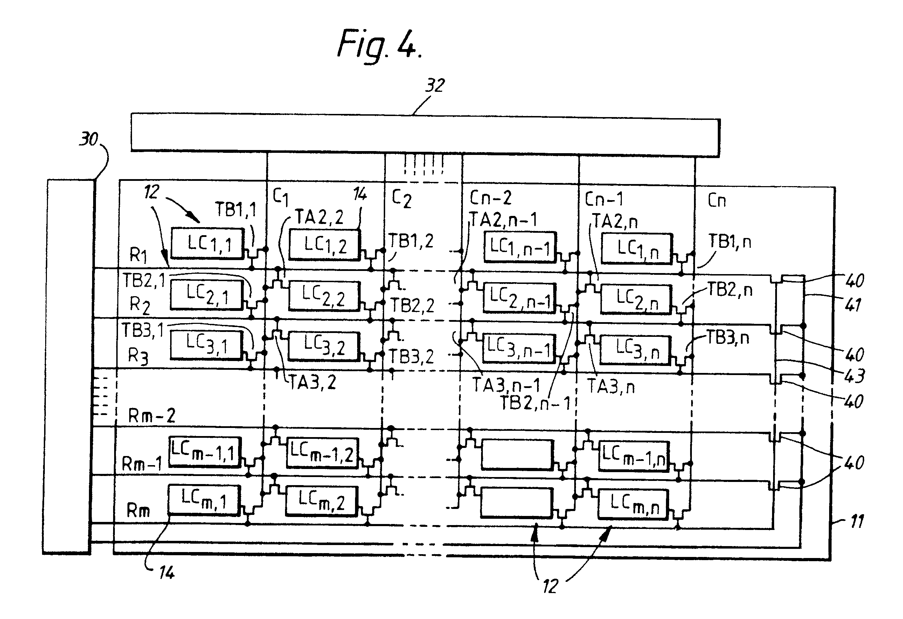

Referring now to Figure 4. there is shown another embodiment of the invention. This embodiment is similar in most respects to the previous embodiments and, accordingly, the same reference numerals have been used to designate corresponding components for simplicity. The embodiment differs from the previous embodiment in the manner in which the supplementary, clamping, TFTs 40 are operated. As shown, these TFTs 40 are again connected between the end of the respective row conductor with which they are associated and the line 41 to which the predetermined potential Voff is supplied. The gates of the TFTs 40 however are all interconnected via a line 43 to which a gating signal, corresponding to Von, is periodically applied. Hence, upon application of such a gating signal, all the clamping TFTs 40 are switched on simultaneously to connect their associated row conductors with the line 41 thereby removing any charge which may have accumulated on a broken section of row conductor remote from the driver circuit 30 should one be present.

The drive circuit 30 is modified in this embodiment so that the row selection switching signals applied to successive row conductors are slightly staggered instead of being practically immediately consecutive and the gating signals to the TFTs 40 applied in the interval between the switching signals. These gating signals may be applied between each successive pairs of switching signals. In addition, or alternatively, a gating signal may be applied in the field blanking period between successive fields. It will be appreciated, therefore that as before the TFTs 40 are gated at times non-concurrent with the switching signals and in this particular case the gating is separated in time from the periods of the switching signals applied to all the row conductors. While for convenience the predetermined potential, Voff, and gating pulses, Von, in this embodiment are obtained from the row driver circuit 30, they could instead be supplied by a separate, but synchronised, circuit.

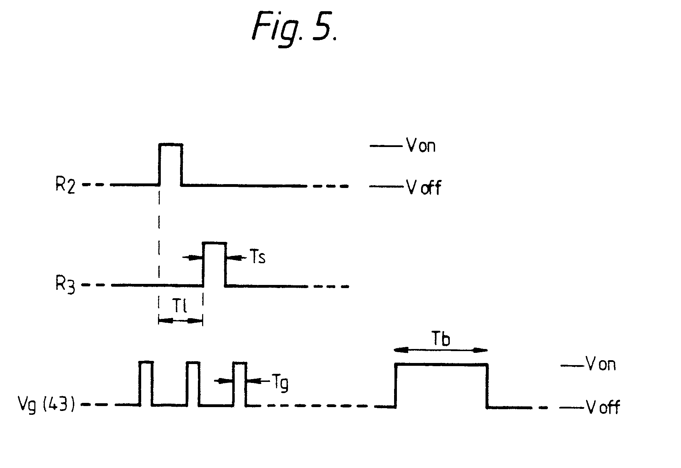

Figure 5 illustrates the signal waveforms applied to two, typical, adjacent row conductors, $R_2$ and $R_3$ for example, and the gating signal waveform applied to the line 43. In this figure, T1 represents a line period as before, Ts represents the period of a row selection switching signal (Von), Ts represents the period of a gating signal Vg (corresponding in magnitude to Von), where Tg<(T1-Ts), and Tf represents the field blanking period.

As will be appreciated this embodiment offers considerable flexibility as to the frequency with which the TFTs 40 can be gated.

With regard to both of the above described embodiments, the supplementary TFTs 40 are fabricated simultaneously with the display element TFTs on the substrate 20, thus using the same TFT technology, so that no further processing operations are necessary in fabricating the display device. Similarly, the lines 41 and 42 are defined simultaneously with the row and/or column conductors by a standard photolithographic process, for example from ITO, aluminium or chromium. Thus, the additional fault tolerance provided by operation of the supplementary TFTs 40 is obtained very simply and at minimal extra cost.

In the above described embodiments the first row and first column of display elements are each controlled through only one TFT connected to a single row and a single column conductor, namely TB1,1 to TB1,n and TB1,1 to TBm,1 respectively. Should one of these TFTs be defective, then the individual element concerned becomes faulty. However, this possibility is not critical if these peripheral elements are to be masked from view anyway. However, in modified forms of these embodiments of display device, the first row of display elements (apart from LC1,1) may also each be associated with two switching transistors in similar manner to the remaining rows by providing anl additional row conductor so that the number of row conductors exceeds the number of rows of display elements by one and providing TFTs TA for this row connected to the additional row conductor. Moreover, an additional column conductor could be provided which is connected to display elements in the first column via respective additional TFTs TA.

Further, different configurations of row and column address conductors could be employed, as are known in the art for fault tolerant display devices using two TFTs for each display element. Thus, although in the above described embodiment at least most of the display elements are driven via two TFTs which are connected to two different row conductors and two different column conductors the display element TFTs could be arranged instead with each pair of TFTs associated with a particular display element being connected to the same column conductor. Also, the column conductors need not be shared by adjacent columns of display elements as described but may instead be uniquely associated with just one column of elements.

Further, a known alternative row conductor configuration may be used in which the rows of display elements are grouped in adjacent pairs with each group being associated with three respective row conductors, these three row conductors not being used for any other row of display elements. Of the three row conductors associated with any one group, two row conductors are connected respectively and solely to the first transistors of the two rows of display elements and the third, intermediate, row conductor is connected to the second transistors of both rows of display elements, and hence shared by both rows. Naturally with such a configuration the drive waveforms applied to the row and column conductors are appropriately modified.

## Claims

1. An active matrix-addressed liquid crystal display device comprising a row and column array of display elements each having first and second spaced electrodes with liquid crystal therebetween and each being associated with two transistors operable by switching signals to supply data signals to the display element, and sets of row and column conductors to which switching signals and data signals are applied respectively by row and column driver circuits connected to their ends, with the two transistors of each display element in a row being connected respectively to two different row conductors, characterised in that the row conductors are each connected at their end remote from the row driver circuit to a supplementary transistor which is switched periodically during operation of the device to connect the end of the row conductor to a predetermined potential.

2. A display device according to Claim 1, characterised in that the gate of each supplementary transistor is connected by a line to a row conductor adjacent the row conductor with which the respective supplementary transistor is associated.

3. A display device according to Claim 1, characterised in that the gates of the supplementary transistors are interconnected and a gating signal is applied periodically to the gates to turn on all supplementary transistors simultaneously.

4. A display device according to Claim 3, characterised in that gating signals for the supplementary transistors are applied in intervals between successive switching signals.

5. A display device according to Claim 3 or Claim 4, characterised in that gating signals for the supplementary transistors are applied during field blanking periods.

6. A display device according to any one of Claims 1 to 5, characterised in that the predetermined potential corresponds to a potential applied by the row driver circuit to the row conductors between switching signals.

7. A display device according to any one of Claims 1 to 6, characterised in that the supplementary transistors are connected to a common line to which the predetermined potential is applied.

8. A display device according to Claim 7, characterised in that the display element transistors, row conductors, supplementary transistors and the common line are provided on a common substrate of the device.

9. A display device according to any one of thee preceding claims, characterised in that the two switching transistors associated with each display element are connected to respective, different, column conductors.

Fig. 1.

EP 0 423 887 A2

## Fig. 2.

## Fig. 3.

# Fig. 4.

# *Fig. 5.*